# EUROPEAN PATENT APPLICATION

(11) **EP 3 000 731 A1**
(43) Date of publication of application: **30.03.2016**
(21) Application number: 15183209.4
(22) Date of filing: 31.08.2015
(51) Int. Cl.: B64D 1/14, B64D 19/02, B64D 25/10

(54) **LANDING CAPSULE FOR SAFE AIRDROPS**

(30) Priority: 25.09.2014 PL 40960014
(71) Applicant: Instytut Podstawowych Problemów Techniki PAN, 02-106 Warszawa (PL); Adaptronica Sp. z.o.o., 05-092 Lomianki (PL)
(72) Inventor: Holnicki-Szulc, Jan, 02-502 Warszawa (PL); Mróz, Arkadiusz, 31-416 Krakó (PL); Faraj, Rami, 02-603 Warszawa (PL)
(74) Representative: Belz, Anna

(57) **Abstract**

Present invention is a motorless landing capsule that allows for fast and safe bringing down goods sensitive for shocks.

Summary of the invention is that landing capsule has a capsule (**1**) equipped with at least one rotor **(2)** and landing gear **(8),** to which at least three legs **(9),** equipped with adjustable pivot points **(10),** are fixed. The landing capsule is equipped with a controllable pneumatic absorber **(13)** that has a cylinder **(14)** with a piston **(15)** and piezoelectric valve **(16).**

The pre-rotation system of the rotor, consisting of battery **(4),** clutch **(6)** and two bevel gears **(5)** and **(7),** is also used to power the control systems.

## Description

The subject of the invention is a landing capsule for safe airdrops.

Techniques for load airdrops can be divided into high-altitude parachute drops and low-altitude drops that use variety of different passive safeguards. Present invention, equipped with integrated adaptive system, implements a new, active method of minimization of the effects of load airdrops.

There are some solutions for effective reduction of drop velocity of the load and for appropriate dissipation of impact energy in the moment of the load's touchdown. "Shock-absorber" type systems for reduction of the load transfer to the discharged products in the moment of impact are known from patents US 2961204, US 3117752, US 2713467, US 3050278 or US 2713466.
Solution described in published description US 2961204 is a parachute system, where impact energy is dissipated with a mechanism that cuts the legs of the landing device. Control of the amount of dissipated energy is done via mechanical modifications done before the use of the capsule.
Shock absorber for parachute drops described in patent US 2713467 is equipped with a spear that dissipates part of the energy by burring into the ground, and with telescopic absorber compressing a liquid.
Description of US 2713466 presents a device for carrying out the safe parachute drops. It is equipped with inflatable relief airbags. Relief of air takes place through holes in the bags, while in the present invention airbag is equipped with controllable relief valve.
Invention US 3117752 is a system of two platforms, four airbags and inclined rods. Such solution allows for stable touchdown of the load dropped with a parachute, thus differently to present invention where stability of touchdown is provided by the control of the rotor and landing gear equipped with a system of cushioning legs.
System described in publication US 3050278 realizes the energy absorption of the impact of the load dropped with a parachute by crushing of the gas inflated plastic foam.

Landing capsule according to the invention has capsule that is equipped with one or two lifting rotors installed on the top of it and a landing gear in a form of frame, to which at least three legs, with adjustable pivot points, are fixed. Adjustable pivot points allow for manual tuning of critical bending moment, upon which the rotational plasticization dissipating the energy of the impact is released. Between the capsule and the landing gear, there is centrally located absorber. The absorber is in a form of cylinder filled with liquid or air, equipped with a piston with piezoelectric, fast-efficient flow valve. The piston of the absorber is connected to the landing gear, and the cylinder is connected to the capsule. Both rotors are connected, through the gears and clutch, with a battery which is also connected, through control system, with absorber's flow valve. The lifting rotor blades are made of a double layer of pre-stressed composite.

Redundancy of shock-absorbing systems and rotors reducing the velocity of touchdown ensure safety and reliability of the landing capsule. Use of the adjustable rotors and landing gear composed of legs allows for controlled, stable touchdown of dropped load. Construction of the landing capsule allows for fast diagnosis of its technical state and easy exchangeability of individual elements, which allows for its multiple use and serial production. The configuration of the invention can be flexibly changed, depending on altitude of the drop and mass of the load.

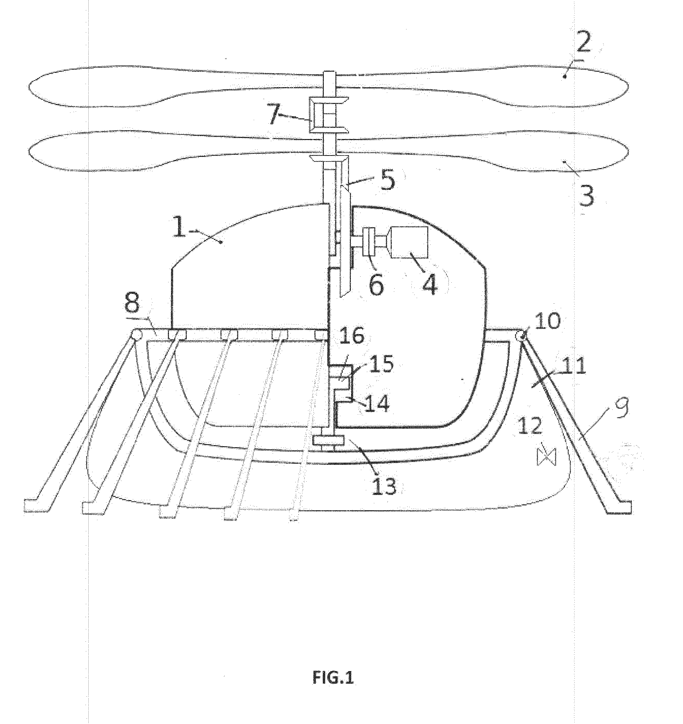

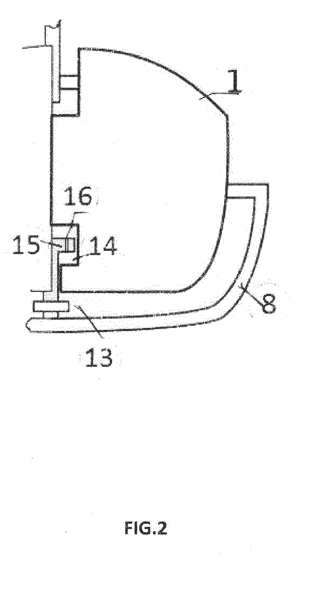

The example of the invention is shown on drawings, where Fig. 1 shows a scheme of the landing capsule with two rotors and Fig. 2 shows the pneumatic absorber with piezo-valve. Capsule **1** has two counter-rotating, coaxial rotors **2** and **3** installed pivotally on top of it. Using the autorotation effect, rotors allow to obtain constant rate of descent of capsule **1**. Rotors **2** and **3** are connected to battery **4** through two bevel gears **5** and **7** and coupling **6**, that transmit the driving power from the power source. Gear **7** also provides synchronization of the two rotors **2** and **3**.
Capsule **1** has the landing gear **8** in form of a frame, installed on the bottom, to which at least three legs **9** are fixed, that are connected to the landing gear **8** through three manually adjustable pivot points **10** allowing to adjust the threshold torque, upon reaching which the connection begins to be plasticized, absorbing part of the impact kinetic energy. Pneumatic cushion **11**, mounted on the landing gear **8**, is equipped with the second controllable relief valve **12**.
The landing capsule has the pneumatic absorber **13**, that is equipped with cylinder **14** with the piston **15** in which a piezo-electric, fast-controllable valve **16** is placed. Cylinder **14** is embedded in the body of the capsule **1**, and piston **15** is fixed to landing gear **8**.
The valve **16** and the second release valve **12** are connected, through control system, with battery **4**.
The beginning of the work of the energy dissipation systems takes place in the following sequence:
a) deflection of the legs of the landing capsule,
b) deflection of the legs of the landing capsule and start using shock absorber.
Wherein, pneumatic cushion **11** starts its work between phase (a) and (b).
Pre-stressing of the rotor blades allows for reduction of their mass, while maintaining durability requirements. It is achieved by introduction of the opposite stresses in the layers (e.g. by applying tensile forces during production) and thus initial deflection of blades. Rotor blades also have adjustable angle of blades profile setting, which changes their angle of attack. The second lifting rotor is subjected to a rotation in the opposite direction, to reduce the torque transmitted to the capsule during driving of the rotor. In addition, use of the second rotor creates additional brake force, reducing the descent velocity. In order to achieve strictly defined, designed rate of descent of the capsule the rotor will be subjected to pre-rotation shortly before throwing the landing capsule out of an aircraft.

## Claims

1. Landing capsule for safe airdrops equipped with an airbag acting as a damper, **characterized in that** it has a capsule (**1**) equipped with one or two lifting rotors (**2**) and (**3**) installed on the top, and between the capsule (**1**) and landing gear (**8**) there is the centrally located absorber (**13**), wherein at least three legs (**9**) are fixed to the landing gear (**8**) with adjustable pivot points (**10**), and the rotors (**2**) and (**3**) are connected by transmissions (**5**) and (**7**) and clutch (**6**) with a battery (**4**).

2. Landing capsule according to claim 1, **characterized in that** the absorber (**13**) is in a form of cylinder (**14**) filled with fluid or air and equipped with a piston (**15**) with piezoelectric, fast-efficient flow valve (**16**), where the piston (**15**) is connected with the landing gear (**8**), while the cylinder (**14**) is connected to the capsule (**1**).

3. Landing capsule according to the claim 1, **characterized in that** the flow valve (**16**) of the absorber (**13**) is connected through a control system with the battery (**4**).

4. Landing capsule according to the claim 1, **characterized in that** the rotors (**2**) and (**3**) have blades which are made as double-layer pre-stressed elements.
